# EUROPÄISCHE PATENTSCHRIFT

(11) **EP 2 185 814 B1**
(45) Veröffentlichungstag und Bekanntmachung des Hinweises auf die Patenterteilung: **16.11.2016**
(21) Anmeldenummer: 08785306.5
(22) Anmeldetag: 01.08.2008
(51) Int. Cl.: F16C 23/08, F16C 33/76

(54) **GELAGERTE HAUPTWELLE FÜR EINE WINDKRAFTANLAGE**
SUPPORTED MAIN SHAFT FOR A WIND POWER PLANT
ARBRE SUPPORTÉ PRINCIPAL POUR UNE INSTALLATION ÉOLIENNE

(30) Priorität: 04.08.2007 DE 102007036891
(43) Veröffentlichungstag der Anmeldung: 19.05.2010
(73) Patentinhaber: AB SKF, 415 50 Göteborg (SE)
(72) Erfinder: PICKEL, Edgar, 97334 Sommerach (DE)
(74) Vertreter: Kohl, Thomas
(86) Internationale Anmeldenummer: PCT/EP2008/006371
(87) Internationale Veröffentlichungsnummer: WO 2009/018976

(56) Entgegenhaltungen:
- EP-A1- 0 006 995
- EP-A1- 1 457 673
- WO-A-2006/019347
- DE-A1-102006 037 890
- DE-U1-202004 007 831
- US-A- 5 005 992

## Beschreibung

Die Erfindung betrifft eine gelagerte Hauptwelle einer Windkraftanlage.

Beispielsweise aus der DE 103 10 639 A1 ist eine Lagerung eines Rotors einer Windenergieanlage bekannt, bei der zwischen einem Gehäuse und einer Hohlwelle ein Pendelrollenlager angeordnet ist. Der Innenring des Pendelrollenlagers ist dabei auf der Hohlwelle angeordnet und zwischen einer Wellenschulter und einem Distanzring mit einem Spannelement axial eingespannt. Der Außenring des Pendelrollenlagers liegt an einer Bohrung des Gehäuses an und ist zwischen einer Gehäuseschulter und einem, gleichzeitig einen Gehäusedeckel bildenden Spannring axial angeordnet. An der anderen axialen Endfläche des Gehäuses ist ein weiterer Gehäusedeckel angebracht, so dass das Pendelrollenlager vollständig im Gehäuse eingeschlossen ist. Zur Hohlwelle hin sind die Gehäusedeckel jeweils durch ein Dichtungssystem abgedichtet. Dadurch ergibt sich eine Anordnung mit vergleichsweise vielen einzelnen Bauelementen.

Aus der DE 10 2006 037 890 A1 ist eine gattungsbildende gelagerte Hauptwelle einer Windkraftanlage bekannt. Eine Aufgabe der vorliegenden Erfindung ist es daher, eine verbesserte gelagerte Hauptwelle einer Windkraftanlage zu schaffen.

Die Aufgabe wird durch den Gegenstand des Anspruchs 1 gelöst. Vorteilhafte Ausgestaltungen sind in den Unteransprüchen beschrieben.

Die Erfindung beruht dabei auf folgenden Erkenntnissen. Durch Einsatz eines Rollenlagers mit sozusagen in das Rollenlager integrierten Dichtungen können mit Vorteil wenigstens einige der eingangs bei der DE 103 10 639 A1 oder der DE 10 2006 037 890 A1 beschriebenen Bauteile eingespart werden bzw. sind bereits in das Rollenlager integriert, womit sich unter anderem natürlich auch die Montage entsprechend vereinfacht.

Weiterer Vorteil der nunmehr vorliegenden Lösung ist es, dass die Dichtungen einer visuellen Inspektion frei zugänglich sind und somit beispielsweise beschädigte Dichtungen erkannt werden können, was bei der eingangs beschriebenen Anordnung der DE 103 10 639 A1 konstruktionsbedingt so nicht möglich war, da deren Dichtungen nach außen hin im Wesentlichen durch andere Bauelemente abgedeckt sind. Somit ist es gemäß der vorliegenden Erfindung auch einfach möglich, nach einem Demontieren der kompletten Dichtung oder bei einer entsprechend ausgebildeten Dichtung nach einem Demontieren eines Teils der Dichtung dem Rollenlager beispielsweise eine Fettprobe zu entnehmen und auch eine Lagerinspektion durchzuführen, was bisher nur schwierig bzw. gänzlich unmöglich war.

Weiterhin ist es mit der vorliegenden Erfindung möglich, das Rollenlager vom Rollenlagerhersteller fertig befettet auszuliefern, so dass mit Vorteil ein bisher bei der Montage auf der Hauptwelle erforderliches initiales Befetten nicht mehr nötig ist. Dadurch, dass nunmehr gemäß der vorliegenden Erfindung das Rollenlager sozusagen als in sich abgedichtete Einheit liefer- und verbaubar ist, wird eine Verschmutzung des Rollenlagerinnern während der Montage mit Vorteil sicher verhindert.

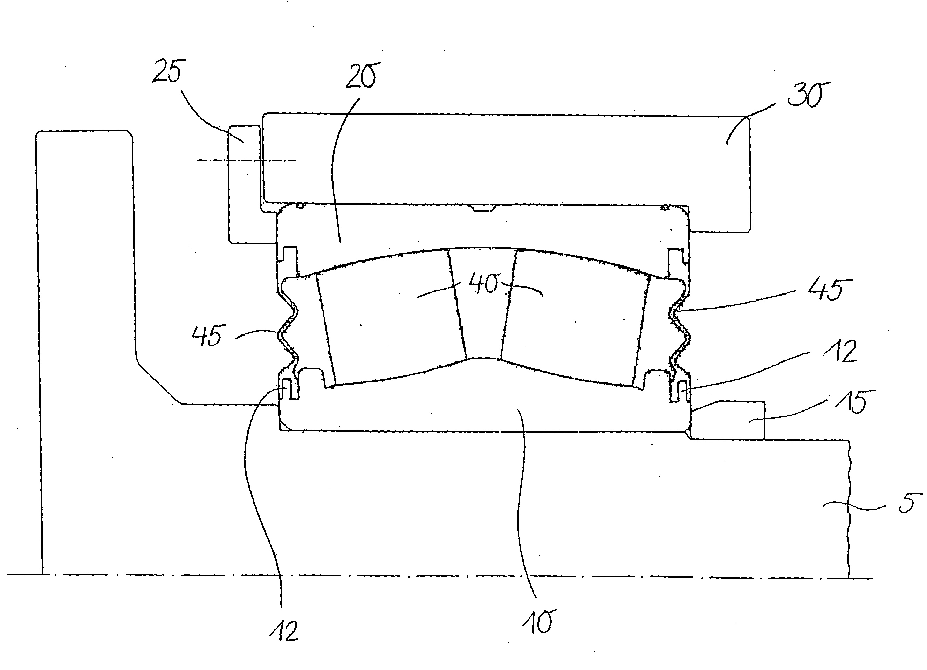

Weitere Vorteile, Merkmale und Einzelheiten der Erfindung ergeben sich aus dem im Folgenden beschriebenen Ausführungsbeispiel der Erfindung anhand der Figur.

Die Figur zeigt dabei als ein Ausführungsbeispiel der Erfindung in Form einer lediglich die Schnittflächen darstellenden Prinzipskizze einen Längsschnitt durch eine obere Hälfte einer ersten Lagerstelle einer Hauptwelle 5 einer Windkraftanlage. Dabei befindet sich die Lagerstelle beispielsweise im Maschinenhaus einer turmartigen Windkraftanlage, wobei das Maschinenhaus am oberen Ende des Turms drehbar gelagert ist. Die Hauptwelle 5 ist dabei im Wesentlichen waagerecht angeordnet und im Sinne einer an sich bekannten Dreipunktlagerung gelagert.

In anderen Ausführungsformen können anstelle der Dreipunktlagerung natürlich auch andere Lagerprinzipien, beispielsweise ein großes Gehäuse, beinhaltend ein Fest- und ein Loslager oder auch zwei einzelne Stehlagergehäuse, eines mit einem Fest- und das andere mit einem Loslager, zum Einsatz kommen.

Auf der linken Seite der Hauptwelle 5 schließen sich beispielsweise drei im Wesentlichen zur Hauptwelle 5 senkrecht stehende Rotorblätter an und auf der rechten Seite ist die Hauptwelle 5 über eine weitere Lagerstelle, beispielsweise ein Planetengetriebe gelagert. An der ersten Lagerstelle ist die Hauptwelle 5 über ein Rollenlager in einem mit dem Maschinenhaus fest verbundenen Gehäuse 30 drehbar gelagert. Die Hauptwelle 5 kann dabei wie dargestellt als Vollwelle oder auch als Hohlwelle ausgebildet sein.

Das Rollenlager ist als ein fettgeschmiertes Pendelrollenlager ausgebildet und umfasst einen Innenring 10, einen Außenring 20 und dazwischen angeordnete nach außen hin ausgebauchte tonnen- oder fassartige Rollen 40. Dabei ist an beiden axialen Enden des Außenrings 20 jeweils eine Dichtung 45 befestigt, die einen die Rollen 40 beinhaltenden Lagerinnenraum gegen einen Austritt von Schmierfett nach außen hin und gleichzeitig einem Eindringen von Verunreinigungen von außen abdichten.

Innenringseitig sind dabei die Dichtungen 45 derart ausgebildet, dass sie am Innenring 10 radial auskragende, in Umfangsrichtung umlaufende Fortsätze 12 umgreifen. Damit die Dichtungen 45 auch den beim Pendelrollenlager zwischen Innenund Außenring 10 und 20 zulässigen Winkelversatz ohne Verlust ihrer Dichtungswirkung abkönnen, sind die Dichtungen 45 in ihrem Mittenbereich faltenbalgartig ausgebildet. Die Rollen sind ferner in einem aus Gründen der Übersichtlichkeit nicht dargestellten Käfig angeordnet. Näheres zu besagtem Pendelrollenlager ist dabei beispielsweise in der WO 2006/019347 A1 beschrieben.

Der Innenring 10 ist dabei auf der Hauptwelle 5 angeordnet und zwischen einer Wellenschulter und einem Spannelement 15 axial eingespannt. Der Außenring 20 ist in einer Bohrung des Gehäuses 30 angeordnet und zwischen einer Gehäuseschulter und einem am Gehäuse befestigten weiteren Spannelement 25 axial festgelegt.

In anderen Ausführungsformen können anstelle des Pendelrollenlagers auch andere Rollenlager, beispielsweise ein zwei- oder mehrreihige Kegelrollenlager in X- oder O-Anordnung, ein beispielsweise unter dem Namen CARB™ bekanntes Toroidalrollenlager und/oder ein ein- oder mehrreihige Zylinderrollenlager eingesetzt werden. In wiederum anderen Ausführungsformen können Bauelemente des Rollenlagers, insbesondere der Innen- und/oder Außenring sowie der Käfig aus sektorartigen Einzelelementen zusammengesetzt ausgebildet sein. Dabei ist klar, dass insbesondere bei den Kegelrollenlagern die Dichtungen ganz anders aussehen können als vorausgehend für das Pendelkugellager beschrieben, da die Kegelrollenlagerung sehr viel winkelsteifer als die Pendel- oder Toroidallagerung ist, und somit die vorausgehend beschriebene faltenbalgartige Ausbildung der Dichtung bei Kegelrollenlagern nicht erforderlich ist.

## Patentansprüche

1. Gelagerte Hauptwelle für eine Windkraftanlage, beinhaltend folgende Merkmale:
- Eine erste Lagerstelle umfasst eine Rollenlagerung mit wenigstens einer Rollenreihe,
- die Rollenlagerung ist als eine Pendelrollenlagerung oder eine Toroidalrollenlagerung ausgebildet,
- die Rollenlagerung umfasst wenigstens ein einstückig ausgebildetes Laufbahnelement, auf dem die Rollen zum Abrollen vorgesehen sind,
- unmittelbar an dem Laufbahnelement sind Dichtmittel zum Abdichten eines die Rollen beinhaltenden Raumes angeordnet,
- die Dichtmittel umfassen eine berührungslose Dichtung oder eine, an einer Gegenfläche zum schleifenden Anliegen vorgesehene Dichtung, **gekennzeichnet dadurch, dass**
- ein Rollenlager mit in das Rollenlager integrierten Dichtungen eingesetzt ist.

2. Hauptwelle nach Anspruch 1, wobei die Lagerung eine zweite, von der ersten axial beabstandete Lagerstelle umfasst.

3. Hauptwelle nach Anspruch 2, wobei die zweite Lagerstelle durch eine Getriebeeinheit, insbesondere ein Planetengetriebe, oder eine weitere Wälzlagerung gebildet ist.

4. Hauptwelle nach einem der Ansprüche 1 bis 3, wobei das Laufbahnelement ein bestimmungsgemäß nicht zum Rotieren vorgesehenes Laufbahnelement der Rollenlagerung ist.

5. Hauptwelle nach einem der Ansprüche 1 bis 4, wobei das Laufbahnelement ein äußeres Laufbahnelement der Rollenlagerung ist.

6. Hauptwelle nach einem der Ansprüche 1 bis 5, wobei die Pendelrollenlagerung zwei Reihen nach außen ausgebauchter fassartiger Rollen umfasst.

7. Hauptwelle nach einem der Ansprüche 1 bis 6, wobei die Hauptwelle im Wesentlichen waagrecht angeordnet ist.

8. Hauptwelle nach einem der Ansprüche 1 bis 7, wobei Rotorblätter der Windkraftanlage im Wesentlichen zur Hauptwelle senkrecht stehend angeordnet sind.

## Claims

1. Supported main shaft for a wind turbine, having the following features:
- a first support point comprises a roller bearing having at least one row of rolling elements,
- the roller bearing is designed as a spherical roller bearing or as a toroidal roller bearing,
- the roller bearing comprises at least one one-piece race element on which the rolling elements are designed to roll,
- sealing means are arranged directly against the race element, for the purpose of sealing a space containing the rolling elements,
- the sealing means comprise a contactless seal or a seal which is designed to bear and rub against a mating surface,
**characterized in that**
- use is made of a roller bearing with seals integrated into the roller bearing.

2. Main shaft according to Claim 1, wherein the support comprises a second support point spaced axially apart from the first.

3. Main shaft according to Claim 2, wherein the second support point is formed by a gear unit, in particular a planetary gear unit, or another rolling-element bearing.

4. Main shaft according to one of Claims 1 to 3, wherein the race element is a race element, of the roller bearing, which is specified as a nonrotating race element.

5. Main shaft according to one of Claims 1 to 4, wherein the race element is an outer race element of the roller bearing.

6. Main shaft according to one of Claims 1 to 5, wherein the pendulum roller bearing comprises two rows of outwardly bowed barrel-type rolling elements.

7. Main shaft according to one of Claims 1 to 6, wherein the main shaft is arranged essentially horizontally.

8. Main shaft according to one of Claims 1 to 7, wherein rotor blades of the wind turbine are arranged such that they stand essentially perpendicular to the main shaft.

## Revendications

1. Arbre principal supporté sur palier pour une éolienne, comprenant les caractéristiques suivantes :
- un premier point de palier comprend un support sur palier à rouleaux avec au moins une rangée de rouleaux,
- le support sur palier à rouleaux est réalisé sous forme de support sur palier à rotule sur rouleaux ou de support sur palier à rouleaux toroïdal,
- le support sur palier à rouleaux comprend au moins un élément de chemin de roulement réalisé d'une seule pièce, sur lequel les rouleaux doivent rouler,
- directement sur l'élément de chemin de roulement sont disposés des moyens d'étanchéité pour l'étanchéité d'un espace comprenant les rouleaux,
- les moyens d'étanchéité comprennent un joint d'étanchéité sans contact ou un joint d'étanchéité prévu pour s'appliquer avec abrasion contre une surface conjuguée,
**caractérisé en ce que**
- un palier à rouleaux est utilisé avec des joints d'étanchéité intégrés dans le palier à rouleaux.

2. Arbre principal selon la revendication 1, dans lequel le support sur palier comprend un deuxième point de palier espacé axialement du premier point de palier.

3. Arbre principal selon la revendication 2, dans lequel le deuxième point de palier est formé par une unité de transmission, en particulier un engrenage planétaire ou un support sur palier à roulements.

4. Arbre principal selon l'une quelconque des revendications 1 à 3, dans lequel l'élément de chemin de roulement est un élément de chemin de roulement du support sur palier à rouleaux qui n'est pas prévu pour tourner lors d'une utilisation conforme.

5. Arbre principal selon l'une quelconque des revendications 1 à 4, dans lequel l'élément de chemin de roulement est un élément de chemin de roulement extérieur du support sur palier à rouleaux.

6. Arbre principal selon l'une quelconque des revendications 1 à 5, dans lequel le support sur palier à rotule sur rouleaux comprend deux rangées de rouleaux en forme de tonneau bombés vers l'extérieur.

7. Arbre principal selon l'une quelconque des revendications 1 à 6, dans lequel l'arbre principal est disposé essentiellement horizontalement.

8. Arbre principal selon l'une quelconque des revendications 1 à 7, dans lequel des pales de rotor de l'éolienne sont disposées essentiellement perpendiculairement par rapport à l'arbre principal.
